# EUROPEAN PATENT SPECIFICATION

(11) **EP 2 719 004 B1**
(45) Date of publication and mention of the grant of the patent: **17.08.2016**
(21) Application number: 12727739.0
(22) Date of filing: 07.06.2012
(51) Int. Cl.: H01M 2/26, H01M 4/06, H01M 6/10, H01M 6/50, H01M 4/38, H01M 4/58

(54) **ELECTROCHEMICAL CELLS WITH IMPROVED SPIRAL-WOUND ELECTRODE ASSEMBLY**
BATTERIEZELLEN MIT VERBESSERTER SPIRALFÖRMIGER ELEKTRODENANORDNUNG
CELLULES ÉLECTROCHIMIQUES AVEC ENSEMBLE D'ÉLECTRODES ENROULÉ EN SPIRALE AMÉLIORÉ

(30) Priority: 09.06.2011 US 201113156884
(43) Date of publication of application: 16.04.2014
(73) Proprietor: Duracell U.S. Operations, Inc., Wilmington, DE 19801 (US)
(72) Inventor: POZIN, Michael, Brookfield, Connecticut 06804 (US); BERKOWITZ, Fred, Joseph, New Milford, Connecticut 06776 (US); PATEL, Bhupendra K., Danbury, Connecticut 06811 (US)
(74) Representative: Hoyng Rokh Monegier LLP
(86) International application number: PCT/US2012/041254
(87) International publication number: WO 2012/170631

(56) References cited:
- US-A- 5 695 530
- US-A1- 2008 050 653
- US-A1- 2009 148 756
- US-A1- 2011 086 254

## Description

### FIELD OF THE INVENTION

The invention relates to an electrochemical cell and more particularly to an electrochemical cell including an improved spiral-wound electrode assembly.

### BACKGROUND OF THE INVENTION

The design of electrode assemblies is critical to the production of electrochemical cells, or batteries, that exhibit acceptable performance characteristics, *e*.*g*., high power, high capacity, etc. While the calculation of the theoretical energy, *i*.*e*., the electrical energy potentially available from a selected anode-cathode couple, is relatively easy to complete, there is a need to design electrode assemblies that permits the actual energy delivered by an assembled battery to approach the theoretical energy.

Governmental limitations may exist regarding the amount of active material that may be included within an assembled cell further complicating the design and manufacture of high-performing batteries. Such restriction necessarily influence electrochemical cell design and require increased utilization of active electrode materials. For example, the United States Department of Transportation currently limits the amount of lithium (less than or equal to 1 gram) that may be included within an assembled cell with an electrode comprising lithium.

Furthermore, an inherent design concern with electrode assemblies, and particularly those that are in a spiral-wound configuration, is that impedance growth may occur due to a reduction in surface area of the electrical connection between the electrode and the electrode tab. For particularly demanding applications, such as in powering digital cameras, the increased impedance may lead to a reduction in device performance and overall consumer satisfaction.

US2011/0086254 A1 discloses a Li/FeS2 battery comprising a spiral-wound electrode assembly wherein the interfacial anode to cathode ratio is less than 1.00 and wherein the lithium anode extends in a cathode-outer-wrap configuration beyond the trailing end of the cathode. The anode tab is fixed on said exposed trailing end on the outer wind.

There exists a need to provide an electrochemical cell with an improved spiral-wound electrode assembly that improves utilization of electrode active materials while maintaining an acceptable level of overall cell impedance over the discharge life of the cell. An electrochemical cell including these characteristics may provide improved device performance and may increase overall consumer satisfaction.

### SUMMARY OF THE INVENTION

The present invention provides an improved spiral-wound electrode assembly as defined in claim 1. In some implementations, the improved electrode assembly pertains to assembled electrochemical cells. In additional implementations, a method of manufacturing an electrode assembly that includes the improved electrode assembly is disclosed.

In one aspect, the invention features a spiral-wound electrode assembly including: (a) a first electrode that includes a first electrode active material, a leading edge and a trailing edge; (b) a second electrode that includes a second electrode active material, a leading edge and a trailing edge; (c) a separator located between the first electrode and the second electrode; and (d) the electrode assembly having an interfacial anode-to-cathode ratio of less than about 1.2. The first electrode, the second electrode, and the separator are wound so that the first electrode forms a layer at the outermost radius of the electrode assembly and so that the trailing edge of the second electrode extends past the trailing edge of the first electrode, wherein the second electrode comprises at least one tab that is affixed to the second electrode, characterized in that the tab is positioned along the second electrode in a location extending past the trailing edge of the first electrode and inward of the second electrode.

Some implementations include one or more of the following features. The first electrode active material may include iron disulfide, iron sulfide, pyrite, and mixtures thereof. The second electrode active material may include lithium. The first electrode active material may include lithium. The second electrode active material may include iron disulfide, iron sulfide, pyrite, and mixtures thereof. The trailing edge of the second electrode may extend past the trailing edge of the first electrode by about 5 mm to about 20mm. The second electrode may include at least one tab that may be affixed to the second electrode and may be positioned along the second electrode in a location extending past the trailing edge of the first electrode.

In another aspect, the invention features an electrochemical cell including: (a) a housing that has at least one open end; (b) an electrode assembly; (c) an electrolyte; and (d) an end-cap assembly enclosing the at least one open end of the housing. The electrode assembly includes (1) a first electrode that includes a first electrode active material, a leading edge and a trailing edge; (2) a second electrode that includes a second electrode active material, a leading edge and a trailing edge; and (3) a separator located between the first electrode and the second electrode. The electrode assembly has an interfacial anode-to-cathode ratio of less than about 1.2. The first electrode, the second electrode, and the separator are wound so that the first electrode forms a layer at the outermost radius of the electrode assembly and so that the trailing edge of the second electrode extends past the trailing edge of the first electrode.

Some implementations include one or more of the following features. The first electrode active material may include iron disulfide, iron sulfide, pyrite, and mixtures thereof. The second electrode active material may include lithium. The first electrode active material may include lithium. The second electrode active material may include iron disulfide, iron sulfide, pyrite, and mixtures thereof. The trailing edge of the second electrode may extend past the trailing edge of the first electrode by about 5 mm to about 20mm. The second electrode may include at least one tab that may be affixed to the second electrode and may be positioned along the second electrode in a location extending past the trailing edge of the first electrode.

In another aspect the invention features a method of manufacturing an electrode assembly that includes: (a) providing an electrode assembly that may include a first electrode that may include a first electrode active material, a leading edge, and a trailing edge; a second electrode that may include a second electrode active material, a leading edge, and a trailing edge; and a separator disposed between the first electrode and the second electrode and (b) winding the electrode assembly so that the first electrode forms an outermost layer of the electrode assembly and so that the trailing edge of the second electrode extends past the trailing edge of the first electrode. The electrode assembly has an interfacial anode-to-cathode ratio of less than about 1.2, and wherein the second electrode comprises at least one tab that is affixed to the second electrode, and wherein the tab is positioned along the second electrode in a location such that when wound the tab location extends past the trailing edge of the first electrode and is inward of the second electrode.

Some implementations include one or more of the following features. The first electrode active material may include iron disulfide, iron sulfide, pyrite, and mixtures thereof. The second electrode active material may include lithium. The first electrode active material may include lithium. The second electrode active material may include iron disulfide, iron sulfide, pyrite, and mixtures thereof. The trailing edge of the second electrode may extend past the trailing edge of the first electrode by about 5 mm to about 20mm. The second electrode includes at least one tab that may be affixed to the second electrode and may be positioned along the second electrode in a location extending past the trailing edge of the first electrode and is inward of the second electrode.

### BRIEF DESCRIPTION OF THE DRAWINGS

While the specification concludes with claims particularly pointing out and distinctly claiming the subject matter which is regarded as forming the present invention, it is believed that the invention will be better understood from the following description taken in conjunction with the accompanying drawings.
FIG. 1 is a schematic of an exemplary embodiment according to the state of the art of an electrochemical cell comprising a first electrode, a second electrode, and a separator therebetween formed into a spiral-wound electrode assembly.
FIG. 2 is a schematic of an embodiment of a foil electrode for use within the electrochemical cell of the present invention.
FIG. 3 is a schematic of an embodiment of a coated electrode for use within the electrochemical cell of the present invention.
FIG. 4A is a cross-section of an embodiment of a spiral-wound electrode assembly of the present invention.
FIG. 4B is a cross-section of a typical spiral-wound electrode assembly of prior art.
FIG. 5 is a schematic of an embodiment of a spiral-wound electrode assembly of the present invention.

### DETAILED DESCRIPTION OF THE INVENTION

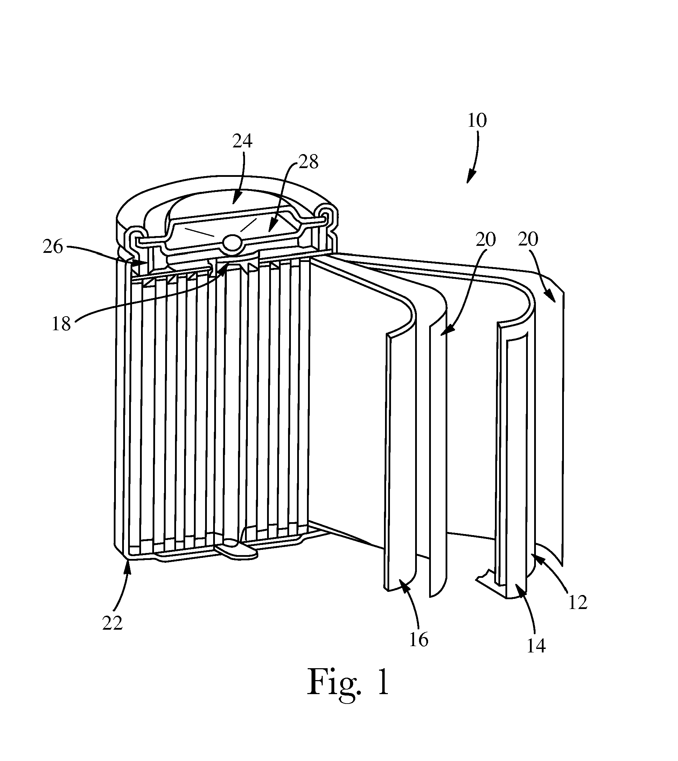

Referring to FIG. 1, a primary electrochemical cell 10 may include a first electrode 12 comprising first electrode active material in electrical contact with a first electrode tab 14, a second electrode 16 comprising second electrode active material in electrical contact with a second electrode tab 18, a separator 20, and an electrolyte. First electrode 12 and second electrode 16, with separator 20 disposed therebetween, may be rolled into a spiral-wound electrode assembly, also referred to as a jelly-roll electrode assembly ("jelly-roll"). First electrode 12, second electrode 16, separator 20, and the electrolyte are contained within a housing 22. The housing 22 may include at least one open end. Electrochemical cell 10 further includes a cap 24 and an annular insulating gasket 26 (collectively referred to as an end-cap assembly). The cap is in electrical isolation from the housing. The cell 10 may include a safety valve 28. The first electrode active material may be anode electrode active material and the second electrode active material may be cathode electrode active material. Alternatively, the first electrode active material may be cathode electrode active material and the second electrode active material may be anode electrode active material.

Anode electrode active material may comprise aluminum (Al), lithium (Li), sodium (Na), potassium (K), calcium (Ca), magnesium (Mg), alloys of the forgoing, carbon or graphite material capable of intercalation, such as lithiated carbon, LiₓTi₅O₁₂, silicon (Si), tin (Sn), and combinations thereof. Of these metals, lithium is preferred because, in addition to being a ductile, soft metal that can easily formed into a jelly roll and used in the assembly of a cell, it possesses the highest energy-to-weight ratio of the group of suitable anode metals. For example, useful anode electrode active materials include lithium, lithium alloyed with aluminum, and lithium metal combined with graphite to form a hybrid anode electrode active material.

Cathode electrode active material may comprise fluorinated carbon represented by the formula (CFₓ)ₙ wherein x varies between about 0.5 and about 1.2, and (C₂F)ₙ. The subscript n in both example cathode electrode active materials refers to the number of monomer units and may vary widely. The cathode electrode active material may comprise copper sulfide (CuS), copper oxide (CuO), lead dioxide (PbO₂), iron sulfide (FeS), iron disulfide (FeS₂), pyrite, copper chloride (CuCl₂), silver chloride (AgCl), silver oxide (AgO, Ag₂O), sulfur (S), bismuth oxide (Bi₂O₃), copper bismuth oxide (CuBi₂O₄), cobalt oxides, vanadium oxide (V₂O₅), tungsten trioxide (WO₃), molybdenum trioxide (MoO₃), molybdenum disulfide (MoS₂), titanium disulfide (TiS₂), transition metal polysulfides, lithiated metal oxides and sulfides, such as lithiated cobalt and/or nickel oxides, lithiated manganese oxides, LiₓTiS₂, LiₓFeS₂, LiFePO₄, LiFeNbPO₄ and mixtures thereof.

The electrolyte comprises a salt dissolved in an organic solvent. A salt may comprise one salt or may comprise a plurality of salts. The organic solvent may comprise an ether-based solvent. The organic solvent may comprise a mixture of ether-based solvents. The organic solvent may comprise a mixture of a cyclic ether-based solvent and an acyclic ether-based solvent. The cyclic ether-based solvent may comprise a dioxolane. As used herein the term dioxolane shall mean 1,3-dioxolane (DIOX), alkyl-substituted dioxolanes or mixtures thereof. Examples of alkyl-substituted dioxolanes are 4-methyl-1,3-dioxolane or 2, 2-dimethyl-1, 3-dioxolane. A preferred dioxolane is 1,3-dioxolane. Typical acyclic ether-based solvents suitable for use include dimethoxyethane, 1,2-dimethoxyethane (DME), ethyl glyme, diglyme, dimethoxypropane, and triglyme. The organic solvent may comprise an organic carbonate. The organic solvent may comprise a mixture of organic carbonates. Examples of organic carbonates include ethylene carbonate (EC), propylene carbonate (PC), dimethyl carbonate (DC), ethyl methyl dicarbonate (EMC), diethyl carbonate (DEC), vinylene carbonate (VC), and combinations thereof. For some applications, at least one optional co-solvent may be used such as 3,5-dimethylisoxazole (DMI), 3-methyl-2-oxazolidone (3Me2Ox), propylene carbonate (PC), ethylene carbonate (EC), butylene carbonate (BC), tetrahydrofuran (THF), diethyl carbonate (DEC), ethylene glycol sulfite (EGS), dioxane, dimethyl sulfite (DMS), gamma butyrolactone (GBL), acetonitrile (AN), methyl acetate (MA), and combinations thereof. Preferred co-solvents for use include 3,5-dimethylisoxazole, 3-methyl-2-oxazolidone and propylene carbonate. For most applications the addition of the optional co-solvent should be limited to 25 weight percent or less based on the total weight of the solvent for the electrolyte, and preferably less than 20 weight percent.

The preferred weight ratio of the acyclic ether-based solvent to dioxolane is from 1:99 to 45:55, more preferably from 10:90 to 40:60 and one of the most preferred is about 29:71. An example electrolyte is 29.0 weight percent DME, 70.8 weight percent DIOX, 0.2 weight percent DMI, and 0.1 weight percent of LiTFS along with 1.0 moles LiI per liter of solution.

Suitable salts may be complexes of inorganic or organic Lewis acids and inorganic ionizable salts. Salts for use in conjunction with iron sulfide-containing cathodes may include lithium trifluoromethane sulfonate (LiCF₃SO₃), lithium bistrifluoromethylsulfonyl imide (Li(CF₃SO₂)₂N), lithium perchlorate (LiClO₄), lithium hexafluoroarsenate (LiAsF₆) or mixtures thereof with lithium trifluoromethane sulfonate being the most preferred. Useful salts for use in other electrochemical systems include lithium fluoride, lithium chloride, lithium bromide, lithium sulfide, LiTFS, LiI, LiTFSI, LiBF₄, LiPF₆, LiAsF₆, LiBOB, Li(CF₃SO₂)₂N, Li(CF₃SO₂)₃C, sodium bromide, potassium bromide, lithium bromide, and mixtures thereof. One of the requirements for utility is that the salts, whether simple or complex, be compatible with the solvent(s) being employed and that they yield a solution which is sufficiently ionically conductive, *e.g*., at least about 10⁻⁴ ohm⁻¹ cm⁻¹. Generally, an amount of at least about 0.3M (moles/liter) may be sufficient for most cell applications.

The separator may comprise a micorporous material, such as polypropylene, polyethylene, and combinations thereof. The material may include filler, such as oxides of aluminum, silicon, titanium, and combinations thereof. The separator may also be produced from microfibers, such as by melt blown nonwoven film technology. The separator may have a thickness from about 8 to about 30 micrometers (microns). The separator may have a pore size range from about 0.005 to about 5 microns and preferably from about 0.005 to about 0.3 microns. The separator may have a porosity range from about 30 to about 70 percent, preferably from about 35 to about 65 percent.

Preferably the separator comprises a material that is wettable or wetted by the electrolyte. A material is said to be wetted by a liquid when the contact angle between the liquid and the surface is less than 90° or when the liquid tends to spread spontaneously across the surface; both conditions normally exist.

The pore size of the separator may be above a minimum value which enables the nonhindered migration of a solvated ion. A solvated lithium ion may be on the order of 10 Angstroms or 0.001 micron. Since it may be common for organic electrolyte systems to form ion pairs and for at least a monolayer of an electrolyte solvent to line the pore walls of the separator, a minimum pore diameter of 0.005 micron enables the nonimpeded passage of an ion through a pore. As the pore size increases, however, nonporous areas need to also increase in order to provide mechanical strength. The result of increasing these nonporous areas may be blockage of a substantial portion of the separator impeding ion migration. As a result, a large number of moderate size pores may be preferred to a few very large pores. Another way of viewing this effect is that the distance between pores may be as important as the pore diameter. Typically, in separators of submicron size, the distance between pores should also be less than a micron. In addition, it is also a function of the separator to form a physical barrier to the passage of electrode particles through the separator which could result in an electrical short between the anode and cathode. Such particles can be as small as a few microns, thus also limiting the upper desired pore diameter. Consequently the pore size may preferably be in the submicron range or the pores should be sufficiently tortuous to provide a physical barrier to the passage of electrode particles through the separator.

A minimum porosity of 35% may typically be utilized to provide moderate ion transport. Porosities greater than 70% typically may result in insufficient tensile strength for processing into an electrochemical cell and the need for thicker than desired separators. Preferred separator porosities may be between about 35% and about 65%.

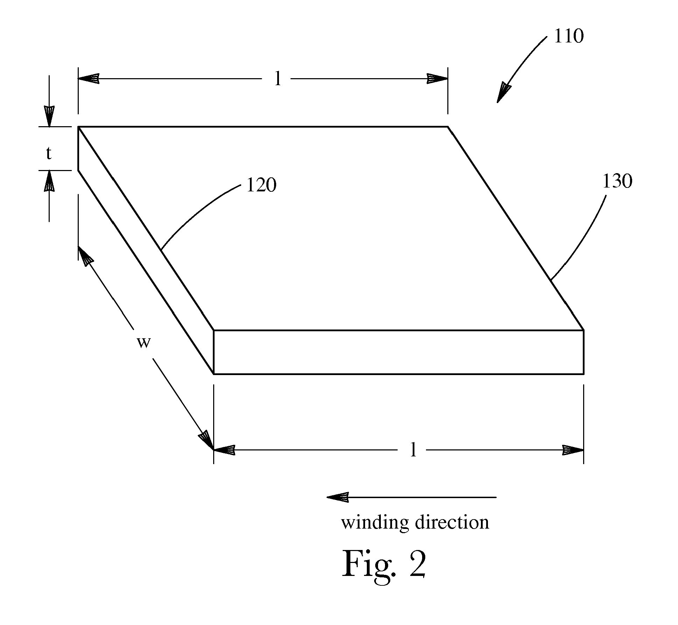

Referring to FIG. 2, an electrode 110 may comprise a foil. The foil may comprise an active material. The active material may comprise an anode active material. For example, the anode active material may comprise lithium, lithium-alloy, lithium-aluminum alloy, aluminum, magnesium, and calcium. The electrode 110 may have a leading edge 120 and a trailing edge 130. The leading edge 120 may be located within the innermost radius of the spiral-wound electrode assembly. The trailing edge 130 may be located at the outermost radius of the spiral-wound electrode assembly. The electrode may have a thickness (t), a width (w), and an overall length (1). For an exemplary AA battery, the electrode may comprise a foil, *e.g.,* a lithium foil, where the thickness may range from about 0.16 mm to about 0.27 mm; the length may range from about 180 mm to about 310 mm; and the width may range from about 38 mm to about 40 mm.

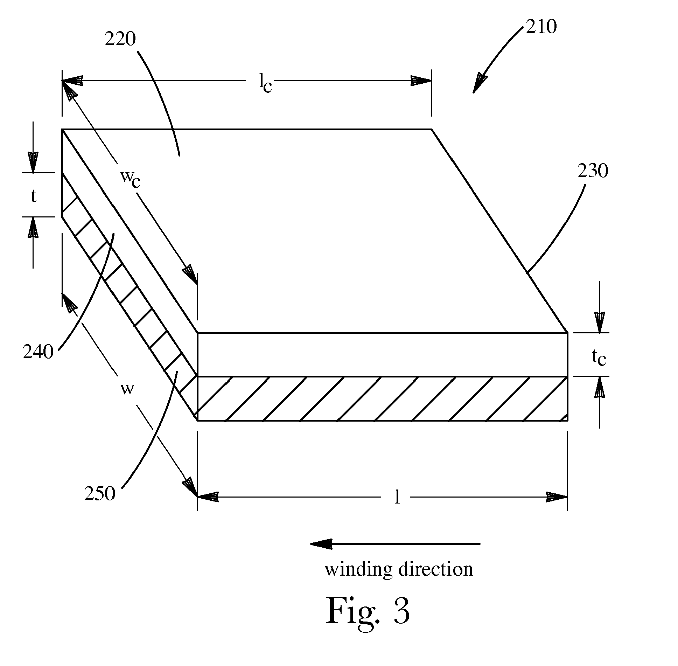

Referring to FIG. 3, an electrode 210 may comprise electrode active material 220 coated onto a metallic substrate 250. The electrode active material may be combined with a binder and electrolyte to form a slurry. The slurry may then be coated on the substrate 250. For example, the electrode 210 may comprise a slurry including iron disulfide that may be coated onto the substrate 250. This example electrode may be the cathode within an assembled battery.

The electrode active material may comprise a Gaussian distribution of particle sizes. For example, the average particle size may be greater than 1µm and less than 30 µm or between about 10 µm and about 25 µm. Preferably the average particle size may between about 12 µm and about 18 µm. The slurry may be coated onto one or both sides of the metallic substrate. The electrode active material may comprise a multi-modal distribution of particle sizes, for example a bi-modal or tri-modal distribution of particle sizes. A multi-modal distribution refers to a distribution having at least two distinct peaks. Thus, a plot of relative percent of particles as a function of particle size for electrode active material having a multi-modal distribution of particle sizes would have at least two distinct peaks. One mode of a particle size distribution may comprise about 10% to about 90% of a sample with average particle size in this mode ranging from about 5 µm to about 20 µm. A second mode of a particle size distribution may comprise about 10% to about 90% of the same sample with an average particle size in this mode ranging from about 15 µm to about 35 µm. An example multi-modal electrode active particle size distribution may be a bi-modal distribution where 30% of the mixture may have an average particle size of between about 5 µm and about 10 µm and the remaining 70% of the mixture may have an average particle size distribution of between about 15 µm and about 25 µm.

The metallic substrate 250 may be a sheet or foil comprising aluminum or stainless steel. The coated electrode 210 has a leading edge 240 and a trailing edge 230. The leading edge 240 is located within the innermost radius of the spiral-wound electrode assembly. The trailing edge 230 is located at the outermost radius of the spiral-wound electrode assembly. The metallic substrate has a thickness (t), a width (w), and an overall length (1). For an exemplary AA cylindrical battery, the thickness of the metallic substrate may range from about 10 µm to about 30 µm; the width may range from about 40 mm to about 44 mm; and the length may range from about 230 mm to about 340 mm.

The coating of electrode material on one side of the metallic substrate may have a thickness (t_{c}), a width (w_{c}), and an overall length (l_{c}). For an exemplary AA cylindrical battery, the electrode material coating thickness may range from about 0.07 mm to about 0.12 mm; the width may range from about 40 mm to about 44 mm; and the length may range from about 230 mm to about 340 mm.

A second coating of electrode material (not shown) may be on the side opposing the coating layer (shown). The coating dimensions of the second coating layer may be equal to, or may differ from, the coating dimensions of the first layer. For example the coating thickness of the first coating layer may be greater than the coating thickness of the second coating layer.

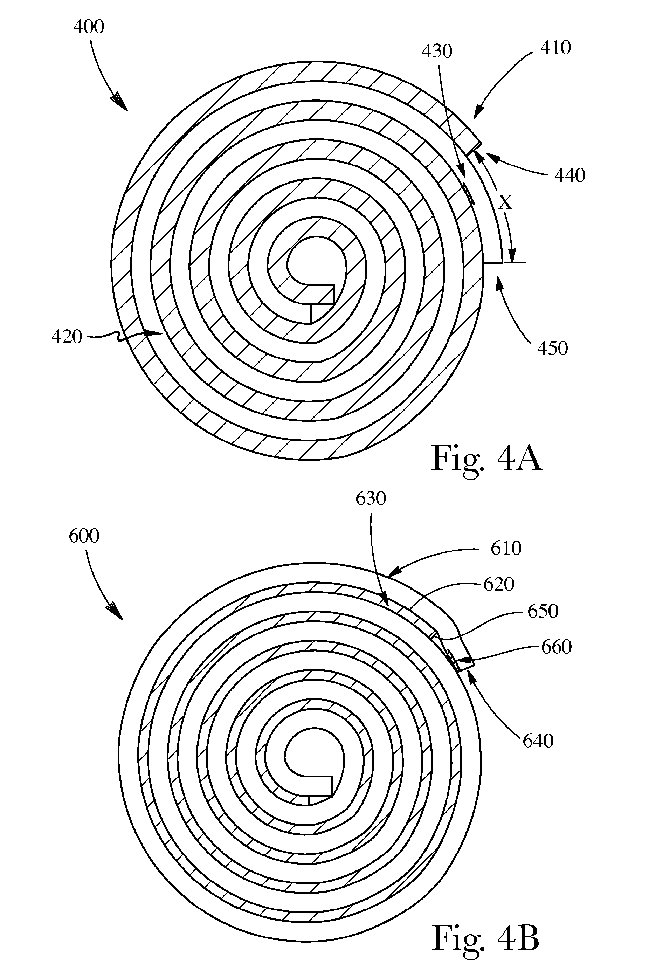

Referring to FIG. 4A, a cross-section of a spiral-wound electrode assembly 400 of the present invention is disclosed. A first electrode 410 includes a trailing edge 440. A second electrode 420 includes a trailing edge 450. A separator (not shown) is disposed between the first electrode 410 and the second electrode 420. The trailing edge of the second electrode 450 extends past the trailing edge of the first electrode 410 by a distance of X. The extension may be referred to as the flag and may be from about 5 mm to about 20 mm and may be from about 10 mm to about 15 mm. A second electrode tab 430 is affixed to the second electrode 420 in an area that is located past the trailing edge of the first electrode 440 and is inward of the second electrode 450. A reaction barrier (not shown), such as an insulating tape, may be placed over the second electrode tab.

Referring to FIG. 4B, a cross-section of a typical spiral-wound electrode assembly within the prior art 600 is disclosed. A first electrode 620 includes a trailing edge 650. A second electrode 610 includes a trailing edge 640. A separator (not shown) is disposed between the first electrode 610 and the second electrode 620. The trailing edge of the second electrode 610 extends past the trailing edge of the first electrode 620 by a distance from about 5 mm to about 20 mm. A second electrode tab 660 may be affixed to the second electrode 610 in an area that is located prior to the trailing edge 640 of the second electrode 610 and past the trailing edge of the first electrode 650. A reaction barrier (not shown), such as an insulating tape, may be placed over the second electrode tab.

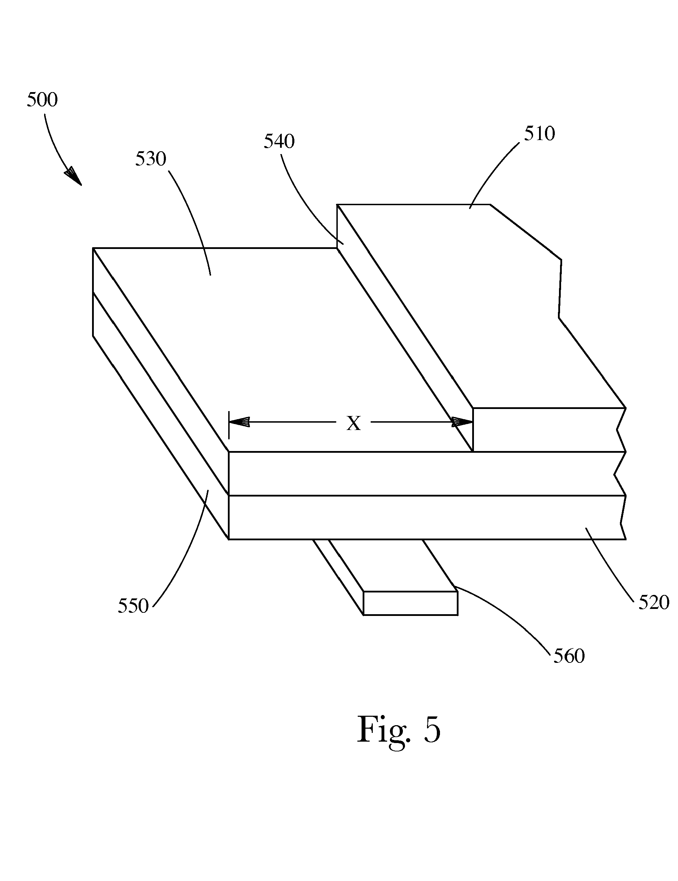

Referring to FIG. 5, a close-up of the trailing edge of a spiral-wound electrode assembly 500 of the present invention is disclosed. The first electrode 510 includes a trailing edge 540. The second electrode 520 includes a trailing edge 550. A separator 530 is disposed between the first electrode 510 and the second electrode 520. The trailing edge of the second electrode 550 extends past the trailing edge of the first electrode 540 by a distance of X. The extension may be referred to as the flag and may be from about 5 mm to about 20 mm and may be from about 10 mm to about 15 mm. A second electrode tab 560 may be affixed to the second electrode 520 in an area that is located past the trailing edge of the first electrode 540 and prior to the trailing edge of the second electrode 550. A reaction barrier (not shown), such as an insulating tape, may be placed over the second electrode tab.

### Spiral-Wound Electrode Assembly

The spiral-wound electrode assembly comprising a first electrode and a second electrode with separator therebetween may be prepared by spirally winding flat electrodes with separator material. The first electrode, for example, may comprise a cathode active material, such as iron disulfide (FeS₂), coated onto metallic substrate, such as a sheet, grid, or screen comprising aluminum or stainless steel. The second electrode, for example, may comprise an anode active material and may be prepared from a solid sheet of lithium metal, *e.g.,* a continuous sheet of lithium metal or lithium alloy, such as a lithium-aluminum alloy. Separator may comprise electrolyte permeable material, such as microporous polypropylene or polyethylene.

To fabricate a spiral-wound assembly, separator may be inserted on each side of the first electrode. The first (top) separator sheet can be designated the outer separator sheet and the second sheet can be designated the inner separator sheet. The second electrode may then be placed against the inner separator sheet to form the flat electrode assembly. The first and second electrodes may be aligned in any arrangement, but generally the smaller, in surface area, of the electrodes is aligned so that its total surface area has an opposing electrode with separator therebetween. The surface area of one electrode that is opposite the second electrode may be defined as the interfacial surface area. One skilled in the art should appreciate that only reactive components that contribute to the overall reaction of a battery will be included in the computation of theoretical capacities. Non-reactive components, such as an insulative barrier, tape, and tabs, may be present within the interfacial area, but these components will not contribute to the overall reaction and subsequent calculations. For an example AA battery, the interfacial surface area between the first and second electrodes may be between about 130 cm² and about 230 cm². The interfacial surface areas may more specifically range from about 150 cm² to about 170 cm², from about 160 cm² to about 180 cm², from about 170 cm² to about 190 cm², from about 170 cm² and about 180 cm², and from about 190 cm² and about 200 cm².

The flat electrode assembly may be spirally wound to form a spiral-wound electrode assembly, or jelly-roll assembly ("jelly-roll"). The winding, for example, may be accomplished using a mandrel to grip an extended separator edge of the flat electrode assembly and then spirally winding the flat electrode assembly to form the wound electrode assembly. The winding may occur either clockwise or counter-clockwise depending on the electrode desired by design to be at the jelly roll's outermost radius, *e.g.,* the first electrode at the outermost radius of the jelly-roll or the second electrode at the outermost radius of the jelly-roll. The finished jelly-roll may have either the anode or cathode located towards its outermost radius.

Typical jelly roll configurations are such that, with the second electrode being at the outermost radius of the jelly roll, the trailing edge of the second electrode extends past the trailing edge of the first electrode. In a jelly-roll configuration, an electrode will contribute to the electrochemical discharge of the battery when there is a second electrode opposing the first electrode. The second electrode may comprise a foil and the foil may be consumed during the discharge of the cell. When an electrical tab is directly affixed to the second electrode comprising foil, the support structure to which the tab is attached may be consumed if the tab is in an area opposing the first electrode. The loss of support structure may result in increased impedance within the cell, a reduction in battery performance, and reduced consumer satisfaction. Complete loss of electrical connection between the tab and the second electrode may also result due to severing of the tab from the electrode. This may result in a complete loss of battery performance and total consumer dissatisfaction. A reaction barrier, such as insulating tape, may be affixed across the tab and a portion of the second electrode to help mitigate the effects of support structure consumption.

The inventors have found that a minimum foil thickness may be necessary to sustain battery performance. The potential for a foil electrode, such as lithium foil, to lose continuity, particularly in the proximity of the tab due to severing, may increase should the foil electrode thickness fall below the minimum thickness. For example, the minimum foil thickness may be between about 0.01 mm and about 0.02 mm. More specifically, the minimum foil thickness may be between about 0.015 mm and about 0.017 mm. In some instances, additional preventive measures may be required to reduce drastic thinning of the foil in order to prevent severing. Such measures may include a reaction barrier or a diaper for redistributing lines of electric forces.

The finished jelly-roll of the present invention may have the first electrode at the outermost radius of the jelly roll and may have the trailing edge of the second electrode extending past the trailing edge of the first electrode. The trailing edge of the second electrode may extend past the trailing edge of the first electrode by about 5 mm to about 20 mm, and about 10 mm to about 15 mm. The second electrode tab may be affixed to the second electrode in an area that extends past the trailing edge of the first electrode. A configuration where the trailing edge of the second electrode extends past the trailing edge of the first electrode and wherein the second electrode tab is affixed to the second electrode in an area that extends past the trailing edge of the first electrode is particularly advantageous in electrochemical systems, *e.g.*, LiFeS₂, where the second electrode comprises a foil, *e.g.,* a foil comprising lithium metal, and the first electrode comprising iron disulfide is located on the outerwrap of the jelly roll. This configuration may enable an increased contribution of active material to the discharge reactions of the cell, such as through elimination of the need of a reaction barrier that may cover a portion of the second electrode. Such a configuration may also reduce the effects of a reduced second electrode tab support structure.

### Theoretical Capacities

The first electrode and the second electrode each have a total theoretical capacity that results from the electrochemically active materials, *i.e.,* materials that may contribute to the electrochemical capacity of the assembled battery, within the electrode structures. The total theoretical capacity of an electrode is determined by multiplying the mass of active electrode material(s) in the electrode, in grams, by the specific theoretical capacity of the active electrode material(s), in amp-hours per gram. For example, the specific theoretical capacity of lithium metal is about 3861 mAh/g. An anode may contain 1 gram of 100% pure lithium as the active material. The resulting total theoretical capacity of the example anode would be about 3861 mAh. Similarly, the specific theoretical capacity of iron disulfide is about 893.5 mAh/g. A cathode may contain 4.95 grams of iron disulfide as the active material. The resulting total theoretical capacity of the cathode would be about 4423 mAh.

A useful expression relating to the overall design of a battery is the anode-to-cathode (A/C) ratio. The A/C ratio enables persons skilled in the art to readily determine the amount of capacity of active electrode material(s) within a battery's anode in relation to the battery's cathode for a particular battery design. The skilled artisan may use an A/C ratio that has a value, or sometimes termed "balance," that suits the overall performance of a battery design. For example, the artisan designing a battery to perform predominantly in high-rate discharge applications may desire to have a cathode capacity that is greater than the anode capacity to account for efficiency losses within the discharge of the cathode active material. Such a design would have an A/C ratio, or balance, of less than one. Alternatively, the artisan designing a battery to perform predominantly in low-rate discharge applications may desire to have a cathode capacity that is less than the anode capacity due to better utilization of the cathode active material. Such a design would have an A/C ratio, or balance, of greater than one.

The A/C ratio may be expressed in relation to the total anode and cathode active material(s) within a battery design. Such an expression may be referred to as the total A/C ratio or total input ratio. To determine the total A/C ratio, the total theoretical capacity of anode active material(s) included within the cell is divided by the total theoretical capacity of cathode active material(s) included within the cell. Utilizing the theoretical electrode capacity examples provided above, the total A/C ratio would be about 0.87 (3861 mAh / 4423 mAh).

The total A/C ratio may be adjusted, or balanced, in accordance with the desired discharge characteristics of the assembled battery. Generally, the Li/FeS₂ battery may be balanced to have a total A/C ratio of less than about 1.2, regardless of cell size, *e.g.,* AA or AAA cylindrical size or smaller or larger sizes. Preferably, the Li/FeS₂ cell may be balanced so that the total A/C ratio may be between about 0.80 and about 1.2; about 0.9 and about 1.2; about 1.0 and about 1.2; and about 1.1 and about 1.2 regardless of cell size.

The A/C ratio may also be defined in relation to the amount of active material(s) within the electrodes along the interfacial area between the electrode assemblies. Such an expression may be referred to as the interfacial A/C ratio or interfacial input ratio. The interfacial A/C ratio takes into account design variations associated with specific electrode parameters and design considerations, *e.g*., jelly roll construction, first electrode-to-second electrode alignment, etc. It may also be possible that certain amounts of anode or cathode active material(s) do not discharge during use, which may be due to cell design, discharge rate, or other factors. The interfacial A/C ratio is useful in describing the battery design while taking into account active materials that in practice may not discharge, but yet may be important to overall cell design or construction. The interfacial A/C ratio is defined as the ratio of the anode active material(s) theoretical capacity to the cathode active material(s) theoretical capacity for the surface area facing between the anode and the cathode with separator therebetween.

To determine the interfacial A/C ratio for batteries employing a jelly roll assembly with a semi-cathode outerwrap (SCOW) design, it is useful to first define segments within the jelly roll assembly to account for varying contributions to the overall interfacial A/C ratio calculation across the length of the jelly roll assembly by the electrodes. It should be appreciated that a similar process may be followed to determine the interfacial A/C ratio for alternative jelly roll designs, such as the anode outerwrap (AOW) design, semi-anode outerwrap (SAOW) design, the cathode outerwrap (COW) design, designs employing multiple tabs for each electrode, and designs locating electrode tabs in locations other than the ends of the electrode assembly. An AOW design may have an anode electrode at the outermost radius of the jelly-roll whose trailing edge extends past the trailing edge of the cathode electrode. A COW design may have a cathode electrode at the outermost radius of the jelly-roll whose trailing edge extends past the trailing edge of the anode electrode. The electrodes in a COW design may be aligned such that the total surface area of the anode would have opposing cathode with separator therebetween.

An electrode segment may be defined as a section of the electrode with a specified length and, when bifurcated along the segment length, may have equal thickness and height. An electrode tab segment may be defined as the electrode segment, *e.g.,* an anode segment, that has an opposing electrode, *e.g.,* a cathode, facing the inside face of the electrode. The electrode tab segment partially contributes to the overall chemical reaction of the cell as it has an opposing electrode on one of its sides. A reaction barrier, such as an insulating tape, may be placed over the electrode tab.

The electrode inner winds segment may be defined as the electrode segment that has an opposing electrode, *e.g.,* a cathode, facing an anode, on both of its sides. The total electrode length is the sum of the electrode tab segment length and the electrode inner winds segment length. The active electrode segment may be defined as the total electrode length minus the electrode tab length. The electrode surface covered by a reaction barrier would also have to be subtracted should a reaction barrier be used. Alternatively, the active electrode segment is also the sum of the electrode outerwrap segment length and the electrode inner winds segment length.

The interfacial A/C ratio may be determined by: (1) calculating the interfacial A/C ratio for each segment; (2) adjusting the interfacial A/C ratio for each segment according to the overall contribution of the segment; and (3) summing the adjusted interfacial A/C ratios for each segment to determine the overall interfacial A/C ratio for the battery. An example calculation of the interfacial A/C ratio for a Li/FeS₂ battery utilizing a semi-COW jelly roll electrode assembly of the present invention (*e.g*., the cathode as the outermost electrode and the trailing edge of the anode extending past the trailing edge of the cathode) with anode and cathode electrodes including a single tab respectively, follows.

The anode may be about 245.5 mm in length, about 39 mm in width, and about 0.1972 mm in thickness. The density of lithium, the active anode material, is 0.534 g/cm³. The purity of the lithium anode active material may be 100%.

The anode tab segment length may be about 10 mm. The anode inner winds segment length may be about 235.5 mm. The active anode segment length may be about 245.5 mm. Additionally, the cathode may have a cathode material loading of 26 mg per cm² per side of the cathode. The FeS₂ may have a purity of 95% and may comprise 89% of the total cathode composition.

The anode capacity for the example described above would be about 20.33 mAhr/cm²/side. The cathode capacity for the example described above would be about 19.65 mAhr/cm²/side. The interfacial A/C ratio for the anode tab segment, where one side of the cathode and two sides of the anode are participating in the reaction, would be about 2.07 [(20.33 mAhr/cm²/side · 2 sides)/ (19.65 mAhr/cm²/side · 1 side)]. The interfacial A/C ratio for the anode inner winds segment, where two sides of the cathode and two sides of the anode are participating in the reaction, would be about 1.04 [(20.33 mAhr/cm²/side · 2 sides)/ (19.65 mAhr/cm²/side · 2 sides)].

The contributions of these segments to the overall interfacial A/C ratio of the battery is determined by adjusting anode tab segment and inner winds interfacial A/C ratios relative to the segment fraction of the overall length. The anode outerwrap segment fraction is about 0.04 (10 mm / 245.5 mm) and the anode inner wrap segment fraction is about 0.96 (235.5 mm / 245.5 mm). The anode tab and inner winds interfacial A/C ratios after adjustment by the respective segment factors are about 0.083 (2.07 · 0.04) and about 0.994 (1.035 · 0.96) respectively. The adjusted anode tab and inner winds interfacial A/C ratios are now summed, resulting in an interfacial A/C ratio for the assembled example cell of about 1.077.

The interfacial A/C ratio may be adjusted, or balanced, in accordance with the desired discharge characteristics of the assembled battery. Generally, the Li/FeS₂ battery may be balanced to have an interfacial A/C ratio of less than about 1.2, regardless of cell size, *e.g.,* AA or AAA cylindrical size or smaller or larger sizes. Preferably, the Li/FeS₂ cell may be balanced so that the interfacial A/C ratio may be between about 0.80 and about 1.2; about 0.9 and about 1.2; about 1.0 and about 1.2; about 1.0 and about 1.15; and about 1.1 and about 1.2 regardless of cell size.

### Experimental Testing

Discharge performance testing follows an ANSI protocol commonly referred to as the digital camera, or Digicam, test. The protocol consists of applying pulsed discharge cycles to the cell. Each cycle consists of both a 1.5 Watt pulse for 2 seconds followed immediately by a 0.65 Watt pulse for 28 seconds. After 10 consecutive pulses, the cell is then allowed to rest for a period of 55 minutes, after which the prescribed pulse regime is commenced for a second cycle. Cycles continue to repeat until a cutoff voltage of 1.05 V is reached. The total number of 1.5 Watt pulses required to reach the cutoff voltage is recorded.

Experimental cells are assembled according to the design parameters described in Table 1 below.

**TABLE 1. Experimental cell design parameters for discharge testing of cathode outerwrap and semi-cathode outerwrap experimental cells.**

| **PARAMETER** | **CATHODE OUTERWRAP EXPERIMENTAL CELLS** | **SEMI-CATHODE OUTERWRAP EXPERIMENTAL CELLS** |
|---|---|---|
| **Cathode** | | |
| Cathode Current Collector (Al) Thickness, mm | 0.02 | 0.02 |
| % FeS₂ in Cathode Mix | 89 | 89 |
| % Carbon in Cathode Mix | 7 | 7 |
| % SAB in Cathode Mix | 1 | 1 |
| Cathode Mix Loading (mg/cm²/side) | 25.893 | 26.080 |
| Total Cathode Thickness, mm | 0.1923 | 0.1917 |
| Cathode Overall Length, mm | 280.82 | 274.68 |
| Cathode Active Length, mm | 267.82 | 261.68 |
| Cathode Width, mm | 41 | 41 |
| Cathode Porosity, % | 22.3 | 21.5 |
| FeS₂ (95% Purity) weight, g | 4.808 | 4.731 |
| Cathode Theoretical Capacity (mAh//cm²/side) | 19.57 | 19.71 |
| **Anode** | | |
| Li Foil Length, mm | 238.5 | 245.5 |
| Li Foil Width, mm | 39 | 39 |
| Li Foil Thickness, mm | 0.1956 | 0.1956 |
| Total Li Weight, g | 0.972 | 1 |
| Anode Theoretical Capacity (mAh//cm²/side) | 20.17 | 20.17 |
| **Separator** | | |
| Material | Polypropylene - 25 µm thickness | Polypropylene - 25 µm thickness |
| Length, mm | 365 | 342 |
| Width, mm | 44 | 44 |
| Electrolyte Weight, g | 1.7 | 1.7 |
| Matched Anode-Cathode Area, cm² | 185.2 | 186.8 |

A primary AA LiFeS₂ cylindrical battery is assembled that includes a cathode outerwrap (COW) jelly roll assembly. The trailing edge of the cathode extends past the trailing edge of the anode by approximately 5 mm. The interfacial A/C ratio is about 1.035. After ambient storage followed by a pre-discharge of 3% cell capacity, Digicam testing is performed on the cell. The cell may exhibit an average of 558 pulses.

A primary AA LiFeS₂ cylindrical battery is assembled according to the present invention that includes a semi-cathode outerwrap jelly roll assembly. The trailing edge of the anode extends past the trailing edge of the cathode by about 10 mm. The interfacial A/C ratio is about 1.077. After ambient storage followed by a pre-discharge of 3% cell capacity, Digicam testing is performed on the cell. The cell may exhibit an average of 574 pulses, an improvement of about 3% versus a COW cell design with an interfacial A/C ratio of 1.035.

The inventors have found that, by extending the trailing edge of the first electrode past the trailing edge of the second electrode, the advantages of having a design with interfacial A/C ratios less than about 1.2 may be realized within, for example, systems employing a foil electrode without a reduction in surface area of the electrical connection between the electrode and the electrode tab. A battery of high capacity and discharge performance may result from the increased anode-to-cathode balance with an electrical connection of the electrode tab to the electrode comprising foil that is less susceptible to severing.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "30%" is intended to mean "about 30%."

While particular embodiments of the present invention have been illustrated and described, it would be obvious to those skilled in the art that various other changes and modifications can be made without departing from the scope of the invention as defined in the attached claims. It is therefore intended to cover in the appended claims all such changes and modifications that are within the scope of this invention.

## Claims

1. A spiral-wound electrode assembly comprising:
a first electrode comprising a first electrode active material, a leading edge and a trailing edge;
a second electrode comprising a second electrode active material, a leading edge and a trailing edge;
a separator disposed between the first electrode and the second electrode;
the electrode assembly having an interfacial anode-to-cathode ratio of less than about 1.2;
wherein the first electrode, the second electrode, and the separator are wound so that the first electrode forms a layer at the outermost radius of the electrode assembly and so that the trailing edge of the second electrode extends past the trailing edge of the first electrode,
wherein the second electrode comprises at least one tab that is affixed to the second electrode, **characterized in that**
the tab is positioned along the second electrode in a location extending past the trailing edge of the first electrode and inward of the second electrode.

2. The spiral-wound electrode assembly of claim 1 wherein the first electrode active material or the second electrode active material is selected from the group consisting of iron disulfide, iron sulfide, pyrite, and mixtures thereof.

3. The spiral- wound electrode assembly of any of the preceding claims wherein the second electrode active material or both comprises lithium.

4. The spiral-wound electrode assembly of any of the preceding claims wherein the first electrode active material comprises lithium.

5. The spiral- wound electrode assembly of any of the preceding claims wherein the second electrode active material is selected from the group consisting of iron disulfide, iron sulfide, pyrite, and mixtures thereof.

6. The spiral-wound electrode assembly of any of the preceding claims wherein the trailing edge of the second electrode extends past the trailing edge of the first electrode by about 5 mm to about 20mm.

7. An electrochemical cell including the spiral-wound electrode of any of the preceding claims, the electrochemical cell further comprising:
a housing having at least one open end;
an electrolyte; and
an end-cap assembly enclosing the at least one open end of the housing.

8. A method of manufacturing the electrode assembly of claims 1-6 comprising:
providing a first electrode comprising a first electrode active material, a leading edge, and a trailing edge;
providing a second electrode comprising a second electrode active material, a leading edge, and a trailing edge;
providing a separator disposed between the first electrode and the second electrode;
winding the electrode assembly so that the first electrode forms an outermost layer of the electrode assembly and so that the trailing edge of the second electrode extends past the trailing edge of the first electrode wherein the electrode assembly has an interfacial anode-to-cathode ratio of less than about 1.2, and
wherein the second electrode comprises at least one tab that is affixed to the second electrode, and
wherein the tab is positioned along the second electrode in a location such that when wound the tab location extends past the trailing edge of the first electrode and is inward of the second electrode.

## Patentansprüche

1. Spiralförmig gewickelte Elektrodenanordnung, umfassend:
eine erste Elektrode, umfassend ein erstes elektrodenaktives Material, eine Vorderkante und eine Hinterkante;
eine zweite Elektrode, umfassend ein zweites elektrodenaktives Material, eine Vorderkante und eine Hinterkante;
einen Separator, angeordnet zwischen der ersten Elektrode und der zweiten Elektrode;
die Elektrodenanordnung, aufweisend ein Anode-zu-Katode Grenzflächenverhältnis von weniger als etwa 1,2;
wobei die erste Elektrode, die zweite Elektrode und der Separator gewickelt sind, sodass die erste Elektrode eine Schicht an dem äußersten Radius der Elektrodenanordnung bildet und sodass die Hinterkante der zweiten Elektrode sich über die Hinterkante der ersten Elektrode hinaus erstreckt,
wobei die zweite Elektrode zumindest einen Tab umfasst, der an der zweiten Elektrode befestigt ist,
**dadurch gekennzeichnet, dass**
der Tab entlang der zweiten Elektrode positioniert ist, an einer Stelle, die sich über die Hinterkante der ersten Elektrode hinaus erstreckt, und Innen von der zweiten Elektrode.

2. Spiralförmig gewickelte Elektrodenanordnung nach Anspruch 1, wobei das erste elektrodenaktive Material oder das zweite elektrodenaktive Material ausgewählt ist aus der Gruppe bestehend aus Eisendisulfid, Eisensulfid, Pyrit und Mischungen davon.

3. Spiralförmig gewickelte Elektrodenanordnung nach einem der vorhergehenden Ansprüche, wobei das zweite elektrodenaktive Material oder beide Lithium umfassen.

4. Spiralförmig gewickelte Elektrodenanordnung nach einem der vorhergehenden Ansprüche, wobei das erste elektrodenaktive Material Lithium umfasst.

5. Spiralförmig gewickelte Elektrodenanordnung nach einem der vorhergehenden Ansprüche, wobei das zweite elektrodenaktive Material ausgewählt ist aus der Gruppe bestehend aus Eisendisulfid, Eisensulfid, Pyrit und Mischungen davon.

6. Spiralförmig gewickelte Elektrodenanordnung nach einem der vorhergehenden Ansprüche, wobei die Hinterkante der zweiten Elektrode sich über die Hinterkante der ersten Elektrode um etwa 5 mm bis etwa 20 mm hinaus erstreckt.

7. Elektrochemische Zelle, umfassend die spiralförmig gewickelte Elektrode nach einem der vorhergehenden Ansprüche, die elektrochemische Zelle, weiterhin umfassend:
ein Gehäuse mit zumindest einem offenen Ende;
einen Elektrolyten; und
eine Endkappenanordnung, umschließend das zumindest eine offene Ende des Gehäuses.

8. Verfahren zum Herstellen der Elektrodenanordnung nach Ansprüchen 1-6, umfassend:
Bereitstellen einer ersten Elektrode, umfassend ein erstes elektrodenaktives Material, eine Vorderkante und eine Hinterkante;
Bereitstellen einer zweiten Elektrode, umfassend ein zweites elektrodenaktives Material, eine Vorderkante und eine Hinterkante;
Bereitstellen eines Separators, angeordnet zwischen der ersten Elektrode und der zweiten Elektrode;
Wickeln der Elektrodenanordnung, sodass die erste Elektrode eine äußerste Schicht der Elektrodenanordnung bildet und sodass die Hinterkante der zweiten Elektrode sich über die Hinterkante der ersten Elektrode hinaus erstreckt,
wobei die Elektrodenanordnung ein Anode-zu-Katode Grenzflächenverhältnis von weniger als etwa 1,2 aufweist, und
wobei die zweite Elektrode zumindest einen Tab umfasst, der an der zweiten Elektrode befestigt ist, und
wobei der Tab entlang der zweiten Elektrode an einer Stelle positioniert ist, sodass, wenn gewickelt, die Stelle des Tabs sich über die Hinterkante der ersten Elektrode hinaus erstreckt, und sich Innen von der zweiten Elektrode befindet.

## Revendications

1. Ensemble d'électrodes enroulé en spirale comprenant :
une première électrode comprenant un premier matériau actif d'électrode, un bord avant et un bord arrière ;
une seconde électrode comprenant un second matériau actif d'électrode, un bord avant et un bord arrière ;
un séparateur disposé entre la première électrode et la seconde électrode ;
l'ensemble d'électrodes ayant un rapport d'interface anode-cathode inférieur à environ 1,2 ; dans lequel la première électrode, la seconde électrode et le séparateur sont enroulés de telle sorte que la première électrode forme une couche sur le rayon le plus à l'extérieur de l'ensemble d'électrodes et de telle sorte que le bord arrière de la seconde électrode se prolonge au-delà du bord arrière de la première électrode,
dans lequel la seconde électrode comprend au moins une languette qui est fixée sur la seconde électrode, **caractérisée en ce que**
la languette est placée le long de la seconde électrode à un emplacement qui se prolonge au-delà du bord arrière de la première électrode et est à l'intérieur de la seconde électrode.

2. Ensemble d'électrodes enroulé en spirale selon la revendication 1 dans lequel le premier matériau actif d'électrode ou le second matériau actif d'électrode est choisi dans le groupe constitué du disulfure de fer, du sulfure de fer, de la pyrite et de leurs mélanges.

3. Ensemble d'électrodes enroulé en spirale selon l'une quelconque des revendications précédentes dans lequel le second matériau actif d'électrode ou les deux comprennent du lithium.

4. Ensemble d'électrodes enroulé en spirale selon l'une quelconque des revendications précédentes dans lequel le premier matériau actif d'électrode comprend du lithium.

5. Ensemble d'électrodes enroulé en spirale selon l'une quelconque des revendications précédentes dans lequel le second matériau actif d'électrode est choisi dans le groupe constitué du disulfure de fer, du sulfure de fer, de la pyrite et de leurs mélanges.

6. Ensemble d'électrodes enroulé en spirale selon l'une quelconque des revendications précédentes dans lequel le bord arrière de la seconde électrode se prolonge au-delà du bord arrière de la première électrode d'environ 5 mm à environ 20 mm.

7. Cellule électrochimique comprenant l'électrode enroulée en spirale selon l'une quelconque des revendications précédentes, la cellule électrochimique comprenant en outre :
un boîtier ayant au moins une extrémité ouverte ;
un électrolyte ; et
un ensemble chapeau fermant l'au moins une extrémité ouverte du boîtier.

8. Procédé de fabrication de l'ensemble d'électrodes selon les revendications 1 à 6 comprenant :
la fourniture d'une première électrode comprenant un premier matériau actif d'électrode, un bord avant et un bord arrière ;
la fourniture d'une seconde électrode comprenant un second matériau actif d'électrode, un bord avant et un bord arrière ;
la fourniture d'un séparateur disposé entre la première électrode et la seconde électrode ;
l'enroulement de l'ensemble d'électrodes de telle sorte que la première électrode forme la couche la plus à l'extérieur de l'ensemble d'électrodes et de telle sorte que le bord arrière de la seconde électrode se prolonge au-delà du bord arrière de la première électrode dans lequel l'ensemble d'électrodes a un rapport d'interface anode-cathode inférieur à environ 1,2, et dans lequel la seconde électrode comprend au moins une languette qui est fixée sur la seconde électrode, et
dans lequel la languette est placée le long de la seconde électrode dans un emplacement tel qu'une fois l'enroulement effectué l'emplacement de la languette se prolonge au-delà du bord arrière de la première électrode et est à l'intérieur de la seconde électrode.
